# EUROPEAN PATENT APPLICATION

(11) **EP 4 431 828 A1**
(43) Date of publication of application: **18.09.2024**
(21) Application number: 23851320.4
(22) Date of filing: 25.05.2023
(51) Int. Cl.: F24F 13/02, H02G 3/22

(54) **WALL BUSHING ASSEMBLY AND AIR CONDITIONER**

(30) Priority: 08.08.2022 CN 202222078485 U
(71) Applicant: Qingdao Haier Air Conditioner General Corp., Ltd., Qingdao, Shandong 266101 (CN); Qingdao Haier Air-Conditioning Electronic Co., Ltd, Qingdao, Shandong 266101 (CN); Haier Smart Home Co., Ltd., Qingdao, Shandong 266101 (CN)
(72) Inventor: SHANG, Qinghao, Qingdao, Shandong 266101 (CN); WANG, Ning, Qingdao, Shandong 266101 (CN); LI, Wei, Qingdao, Shandong 266101 (CN); HE, Yan, Qingdao, Shandong 266101 (CN)
(74) Representative: Michalski Hüttermann & Partner Patentanwälte mbB
(86) International application number: PCT/CN2023/096352
(87) International publication number: WO 2024/032092

(57) **Abstract**

The present application relates to the technical field of air conditioner pipe fittings, and discloses a wall bushing assembly, comprising: a fresh air pipe, wherein a fresh air pipe cavity is formed inside the fresh air pipe; and a wire harness pipe, attached to the fresh air pipe side by side in the same direction, wherein a wire harness pipe cavity is formed inside the wire harness pipe, and an installation opening which extends and is formed in the pipe length direction and is used for installing a wire harness group in the wire harness pipe cavity is formed in the attached surface of the wire harness pipe. The attached surface of the fresh air pipe can seal the installation opening after the wire harness pipe is attached to the fresh air pipe. According to the wall bushing assembly in embodiments of the present disclosure, the wire harness group and a fresh air channel are separated by means of the fresh air pipe and the wire harness pipe, such that mutual interference between the wire harness group and the fresh air channel can be avoided; moreover, the wire harness group is installed by means of the installation opening formed in the wire harness pipe, and the installation opening is sealed by means of the fresh air pipe, such that the structure is simple, and installation is rapid and convenient. The present application further discloses an air conditioner.

## Description

This application claims priority to Chinese Patent Application No. CN202222078485.9, filed on August 8, 2022, the content of which is incorporated herein by reference in its entirety.

### TECHNICAL FIELD

The present disclosure relates to the technical field of pipes of air conditioners, and more particularly to a through-wall pipe assembly and an air conditioner.

### BACKGROUND

In the hot summer with high temperatures, many people like to stay in the air-conditioned room. Although an air-conditioned environment makes people feel comfortable, it is harmful to the health of users. Due to the strong airtightness and weak airflow, users will get symptoms such as nasal obstruction, tinnitus, fatigue, and skin allergies for a long time, which are generally considered to be suffering from "air condition sickness".

To improve such situations, some air conditioner manufacturers provided air conditioners with fresh air functions in recent years. The indoor unit of the air conditioner is equipped with a fresh air pipe. The air inlet end of the fresh air pipe is disposed of outdoors, the outdoor fresh air can be introduced into the indoor environment through the fresh air pipe, thereby improving air quality in the indoor environment.

When mounting the air conditioner, the fresh air pipe needs to be routed to the outside through a through-wall hole punched in the wall. Similarly, the connecting pipeline between the indoor unit and the outdoor unit (such as refrigerant pipes and power supply wires) also needs to be routed to the outside through the through-wall hole. How to arrange the fresh air pipe and the connecting pipeline between the indoor unit and the outdoor unit more reasonably becomes an important problem.

During the implementation of the embodiment of the present disclosure, at least the following problems have been found in the related arts:

In the related art, there are mainly two arrangements of the fresh air pipe and the connecting pipeline between the indoor unit and the outdoor unit: (1) sharing one same pipe; (2) separately mounting in different pipes. However, the two arrangements have some disadvantages. The connecting pipeline in the former arrangement is messy and easily takes up the air inlet area of the fresh air pipe. The connecting pipeline in the latter arrangement is not easy to mount and two different pipes are difficult to pass through the through-wall hole. There remains a need for improvement in the related art.

### SUMMARY

In order to have a basic understanding of some aspects of the disclosed embodiments, a brief summary is given below. The summary is not intended to be a general comment to identify crucial/essential constituent elements or to describe the protection scope of these embodiments but rather to serve as a preface to the detailed description that follows.

The embodiments of the present disclosure provide a through-wall pipe assembly and an air conditioner to solve the disadvantages of placing the fresh air pipes and the connecting pipeline between the indoor unit and the outdoor unit in the related art.

In some embodiments, a through-wall pipe assembly comprises:
a fresh air pipe, having a fresh air pipe cavity formed inside; and
a wire harness pipe, attached to the fresh air pipe co-directionally side-by-side, having a wire harness pipe cavity formed inside, and having a mounting slot opening formed in a pipe length direction on an attached surface of the wire harness pipe for mounting a wire harness group inside the wire harness pipe cavity;

where the mounting slot opening is sealed by the attached surface of the fresh air pipe in a case where the wire harness pipe is attached to the fresh air pipe.

In some embodiments, the wire harness pipe comprises an outer pipe wall portion and two bending edge portions formed and extended from two sides of the outer pipe wall along the attached surface face-to-face, and the mounting slot opening is formed by a gap between the two bending edge portions.

In some embodiments, a cross-section of the fresh air pipe is shaped in a closed circular arc, a cross-section of the wire harness pipe is shaped in a semi-closed circular arc, and a cross-section of the fresh air pipe and the attached wire harness pipe is shaped in a circle.

In some embodiments, a cross-section of the fresh air pipe is shaped in a semicircle, and a cross-section of the wire harness pipe is shaped in a semicircle.

In some embodiments, the through-wall pipe assembly further comprises a detachable wind cap, disposed at an air inlet end of the fresh air pipe and comprising:
a cap body, formed as a cylinder extended outwardly and co-directionally with the fresh air pipe, and one end of the cap body facing outwardly being closed, and the other end of the cap body facing inwardly being sleeved to the air inlet end of the fresh air pipe, and a fresh air inlet being provided on a side of the cap body facing downwardly; and
a grille, covering the fresh air inlet.

In some embodiments, the through-wall pipe assembly further comprises a fresh air inner-connecting pipe group for connecting the fresh air pipe to a fresh air device.

The fresh air inner inner-connecting pipe group comprises:
a transition connecting pipe, a first transition end of the transition connecting pipe being connected to the air outlet end of the fresh air pipe, and a second transition end of the transition connecting pipe being connected to an intermediate connecting pipe; where a passing air area of the second transition connection end is larger than a passing air area of the first transition end; and
the intermediate connecting pipe, one end of the intermediate connecting pipe is connected to the second transition connection end, and the other end of the intermediate connecting pipe is connected to the fresh air device.

In some embodiments, the fresh air inner-connecting pipe group further comprises an outer joint disposed at one end of the intermediate connecting pipe connecting the fresh air device.

In some embodiments, the transition connecting pipe and/or intermediate connecting pipe is/are corrugated hose(s).

In some embodiments, the through-wall pipe assembly further comprises a strapping member, and the wire harness group and the transition connecting pipe are connected by strapping with the strapping member.

In other embodiments, an air conditioner comprises an air conditioner main body and any one of the through-wall pipe assemblies as disclosed in the above embodiment.

The through-wall pipe assembly provided by the embodiments of the present disclosure can have the following technical advantages:
According to the through-wall pipe assembly provided by the embodiments of the present disclosure, the wire harness group and the fresh air channel are separated by the fresh air pipe and the wire harness pipe, avoiding mutual interference between the wire harness group and the fresh air channel. Moreover, the wire harness group is mounted through the mounting slot opening formed in the wire harness pipe, and the mounting slot opening is sealed by the fresh air pipe, which is simple in structure and quick and easy during mounting.

The above general description and the description below are exemplary and explanatory only and are not intended to limit the present disclosure.

### BRIEF DESCRIPTION OF THE DRAWINGS

One or more embodiments are illustrated using the corresponding drawings, which do not constitute a limitation of the embodiments, elements having the same reference numerals in the drawings are shown as similar elements, and the drawings do not constitute a limitation of proportion, where:
Fig. 1 is an overall schematic diagram of a through-wall pipe assembly according to an embodiment of the present disclosure.
Fig. 2 is an exploded view of the through-wall pipe assembly according to the embodiment of the present disclosure.
Fig. 3 is a schematic diagram of a fresh air pipe according to the embodiment of the present disclosure.
Fig. 4 is a schematic diagram of a wire harness pipe according to the embodiment of the present disclosure.
Fig. 5 is a sectional view of the fresh air pipe and the wire harness pipe being matched according to the embodiment of the present disclosure.
Fig. 6 is an external schematic diagram of a wind cap according to the embodiment of the present disclosure.
Fig. 6a is a sectional view of the wind cap according to the embodiment of the present disclosure.
Fig. 7 is an external schematic diagram of a transition connecting pipe according to the embodiment of the present disclosure.
Fig. 7a is a sectional view of a transition connecting pipe according to the embodiment of the present disclosure.
Fig. 8 is an external schematic diagram of an intermediate connecting pipe according to the embodiment of the present disclosure.
Fig. 9 is a schematic diagram of an outer joint according to the embodiment of the present disclosure.

### REFERENCES IN THE DRAWINGS:

100: fresh air pipe; 101: recess;
200: wire harness pipe; 210: outer pipe wall portion; 220: bending edge portion; 230: mounting slot opening;
300: wind cap; 310: cap body; 311: protrusion; 320: grille;
400: transition connecting pipe; 410: first transition end; 420: second transition end; 430: transition slope;
500: intermediate connecting pipe;
600: outer joint;

### DETAILED DESCRIPTION OF THE EMBODIMENTS

In order to enable a more detailed understanding of the features and technical content of the embodiments of the present disclosure, the implementation of the embodiments of the present disclosure will be described in detail below in conjunction with the accompanying drawings, which are for illustration only and are not intended to limit the embodiments of the present disclosure. In the following technical description for convenience of explanation, several details are provided for a full understanding of the disclosed embodiments. However, one or more embodiments may still be practiced without these details. In other instances, the well-known structures and devices may simplify the disclosure in order to simplify the drawings.

The terms "first", "second" and the like in the specification and claims of embodiments of the present disclosure and the above drawings are used to distinguish similar elements and are not necessarily used to describe a particular order or priority. It should be understood that the data used in this way can be interchanged where appropriate for the embodiments of the present disclosure described herein. Furthermore, the terms "comprise" and "have" and any variations thereof are intended to cover a non-exclusive inclusion.

In embodiments of the present disclosure, directional or positional relationships indicated by terms such as "up", "down", "inside", "in", "outside", "front" and "rear" is based on the directional or positional relationship shown in the drawings. These terms are mainly intended to describe embodiments of the present disclosure, not to limit that the described devices, elements, or components must have a specific orientation or be configured and operated in a specific orientation. Furthermore, in addition to indicating the directional or positional relationship, the above partial terms might also be used to convey other meanings, for example, the term "on" might also be used to indicate a dependency relationship or connectional relationship in some cases. Those having ordinary skills in the art may understand specific meanings of these terms in the embodiments of the present disclosure according to specific situations.

In addition, the terms "dispose", "connect" and "fix" should be understood in a broad sense. For example, "connect" may be a fixed connection, detachable connection, or integral connection, may be a mechanical connection or electrical connection, may be a direct connection, or an indirect connection through an intermediate medium, or may be internal communication between two devices, elements, or components. Those having ordinary skills in the art may understand specific meanings of the above terms in the embodiments of the present disclosure according to specific situations.

Unless otherwise illustrated, the term "a plurality of' means two or more.

In the embodiments of the present disclosure, the character "j" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

It should be noted that embodiments of the present disclosure and features in the embodiments may be combined with one another without conflict.

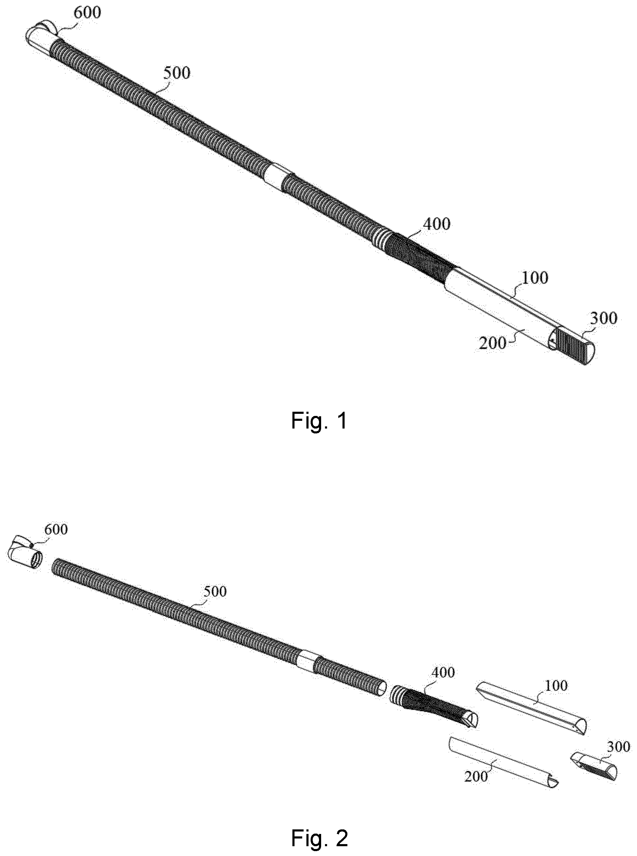

As shown in Fig. 1 and Fig. 2, in some optional embodiments, a through-wall pipe assembly comprises a fresh air pipe 100, a wire harness pipe 200, a fresh air inner-connecting pipe group, and so on. The fresh air pipe 100 and wire harness pipe 200 serve as a pipe portion passing through the wall and the fresh air inner-connecting pipe group serves as a pipe portion connecting the fresh air pipe 100 to a fresh air device, such as an air conditioner, on the indoor side.

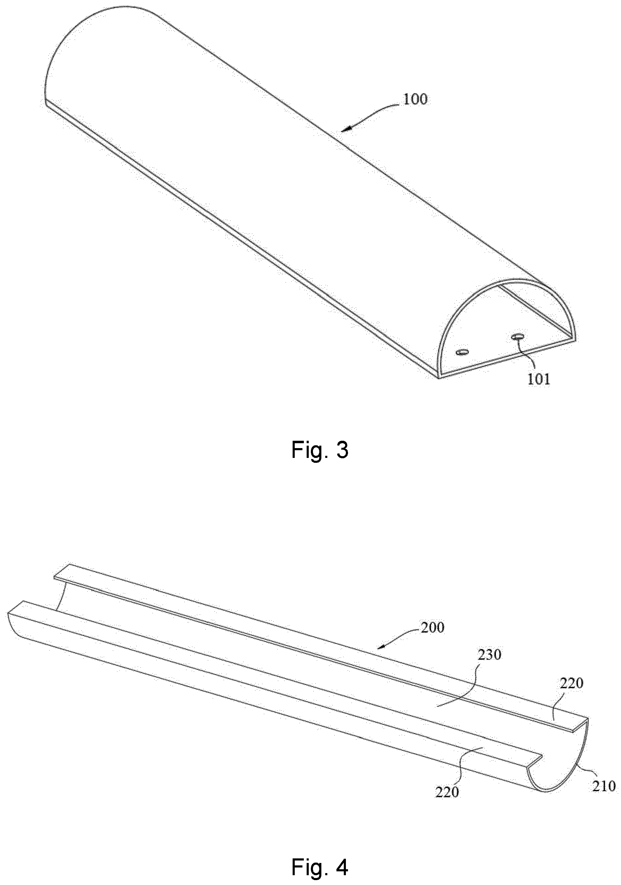

In some embodiments, as shown in Fig. 3, the fresh air pipe 100 is a long straight pipe having a fresh air pipe cavity formed inside in a pipe length direction and opened at two ends. The fresh air pipe cavity is a channel through which outdoor air can flow in. When the fresh air pipe 100 is mounted on a through-wall hole in a building wall, one end of the fresh air pipe 100 is placed on the outer side of the wall as the air inlet end of the fresh air pipe 100, and the other end is placed on the inner side the wall (i.e., the indoor side) as the air outlet end of the fresh air pipe 100, and the outdoor air flows from the air inlet end of the fresh air pipe 100 to the air outlet end of the fresh air pipe 100 through the fresh air pipe cavity.

In the embodiments, the inner wall surface and the outer wall surface of the fresh air pipe 100 are smooth. The outer wall surface of the fresh air pipe 100 is a surface in contact with the through-wall hole and the wire harness pipe 200, and the outer wall surface is smooth for reducing the friction between the contact surfaces of the fresh air pipe 100 with the through-wall hole and the wire harness pipe 200 during the mounting process, so that the fresh air pipe 100 can be passed through the through-wall hole more labor-saving and quickly. The inner wall surface of the fresh air pipe 100 is a surface in contact with air, and the inner wall is smooth for reducing the resistance influence of the fresh air pipe cavity to airflow, so as to increase the air intake volume and the air intake rate.

In other embodiments, the fresh air pipe 100 can not only be configured to introduce outdoor fresh air into the indoor side but can also serve as an "exhaust pipe" to discharge the dirty air from the indoor side to the outdoor side environment, in which the order of airflow through the fresh air pipe 100 is from the outlet end of the fresh air pipe 100 (indoor side) through the fresh air pipe cavity to the air inlet end (outdoor side).

Optionally, the fresh air pipe 100 can be made of metallic materials, nonmetallic materials, or composite materials, commonly used metallic materials such as galvanized iron, stainless steel, or aluminum, and commonly used nonmetallic materials such as rigid polyvinyl chloride, fibrous glass reinforced plastic, etc. The embodiments of the present disclosure do not limit the selection of materials for the fresh air pipe 100.

Optionally, the thickness of the wall of the fresh air pipe 100 is 0.3 cm to 1 cm. Herein, the thickness of the wall of the fresh air pipe 100 can be adaptively adjusted according to factors such as the designed ventilation volume of the fresh air pipe 100, the size of the through-wall hole, the material of the fresh air pipe 100, and others, so that to satisfy the design requirements of the ventilation and the pressure-bearing in the through-wall hole where the fresh air pipe 100 is mounted and to safeguard the durability of the fresh air pipe 100.

Optionally, the length of the fresh air pipe 100 is 30 cm to 40 mm. Herein, the length of the fresh air pipe 100 can be lengthened or shortened appropriately based on the thickness of the building walls, and the present disclosure does not limit the length of the fresh air pipe 100.

In some embodiments, as shown in Fig. 4, the wire harness pipe 200 is a long straight pipe, and wire harness pipe 200 is attached to the fresh air pipe 100 co-directionally side-by-side, so the wire harness pipe 200 and the fresh air pipe 100 can be passed through the same through-wall hole. The pipe length direction of the wire harness pipe 200 and fresh air pipe 100 is the punched direction of the through-wall hole. The fresh air pipe 100 has a wire harness pipe cavity formed inside in a pipe length direction and opening at two ends. The wire harness pipe cavity is a space for receiving the wire harness group of the air conditioner so that the wire harness group can connect to the indoor unit and the outdoor unit of the fresh air device, such as the wire harness group connecting to the indoor unit and the outdoor unit of the air conditioner device. In a case where the wire harness pipe 200 passes through the through-wall hole in the wall of the building, one end of the wire harness pipe 200 is placed on the outer side of the wall and the other end is placed on the inner side of the wall (i.e., indoor side).

Optionally, the harness types of the wire harness group comprise but are not limited to refrigerant pipes, signal wires, power supply wires, condensation pipes, etc. The wire harness pipe cavity of the wire harness pipe 200 may receive one or more of the above-described types of harnesses, a plurality of wire harnesses can be placed into the wire harness pipe cavity after bundling, or a plurality of wire harnesses can be dispersed and placed directly into the wire harness pipe cavity.

In the embodiments, the fresh air pipe 100 and the wire harness pipe 200 are attached in a surface-contacting manner which can increase the contact area between the fresh air pipe 100 and the wire harness pipe 200 and can reduce the misplaced movement between the fresh air pipe 100 and the wire harness pipe 200 after being mounted, so as to limit position and be matched mutually.

Optionally, the attached surface of the fresh air pipe 100 and the wire harness pipe 200 is flat. Alternatively, the attached surface of the fresh air pipe 100 and the wire harness pipe 200 is regular or irregularly curved, such as an arc surface, a wave surface, a tooth surface, etc. The attached surfaces of the fresh air pipe 100 and the wire harness pipe 200 are matched in shapes, so as to be attached tightly, and the gap between the attached surfaces is reduced, preventing air leakage and dust.

In some embodiments, the wire harness pipe 200 can be made of metallic materials, nonmetallic material, or composite material, commonly used metallic materials such as galvanized iron, stainless steel, or aluminum, and commonly used nonmetallic materials such as rigid polyvinyl chloride, fibrous glass reinforced plastic, etc. The embodiments of the present disclosure do not limit the selection of materials for the fresh air pipe 200.

Optionally, the wire harness pipe 200 and the fresh air pipe 100 are made in the same material, such as rigid polyvinyl chloride, which can save the number of process equipment types and reduce production costs.

Optionally, the thickness of the wall of the fresh air pipe 200 is 0.3 cm to 1 cm. Herein, the thickness of the wall of the wire harness pipe 200 can be adaptively adjusted according to factors such as the size of the through-wall hole, the material of the wire harness pipe 200, and others, so as to satisfy the design requirements of the pressure-bearing in the through-wall hole where the wire harness pipe 200 is mounted and to safeguard the durability of the wire harness pipe 200.

Optionally, the thicknesses of the wall of the wire harness pipe 200 and the fresh air pipe 100 are the same.

In some embodiments, the length of the wire harness pipe 200 is 30 cm to 40 mm. Herein, the length of the wire harness pipe 200 can be lengthened or shortened appropriately based on the thickness of the building walls, and the present disclosure does not limit the length of the wire harness pipe 200.

Optionally, the lengths of the wire harness pipe 200 and the fresh air pipe 100 are the same.

The conventional threading method of the pipe with a fully enclosed outer peripheral outline can only be threaded in at one end and out at the other end. Due to the soft material of the wire harness, the wire harness is easy to accumulate in the pipe during threading, so there is the problem of inconvenient threading.

To overcome the above problem, in the embodiments of the present disclosure, a mounting slot opening 230 is formed in the wall of the wire harness pipe 200, extended along the pipe length direction to two ends of the wire harness pipe 200, and through in the thickness direction of the wall of the wire harness pipe 200. In the embodiments, the mounting slot opening 230 is equivalent to an opening in the outer peripheral outline of the wire harness pipe 200, making the outer peripheral outline of the wire harness pipe 200 a semi-closed structure, and a large number of the wire harness can be placed directly into the wire harness pipe cavity from the outside via the mounting slot opening 230 in a traversing method, which is more convenient to operate and not causing the problem of wire harness accumulation.

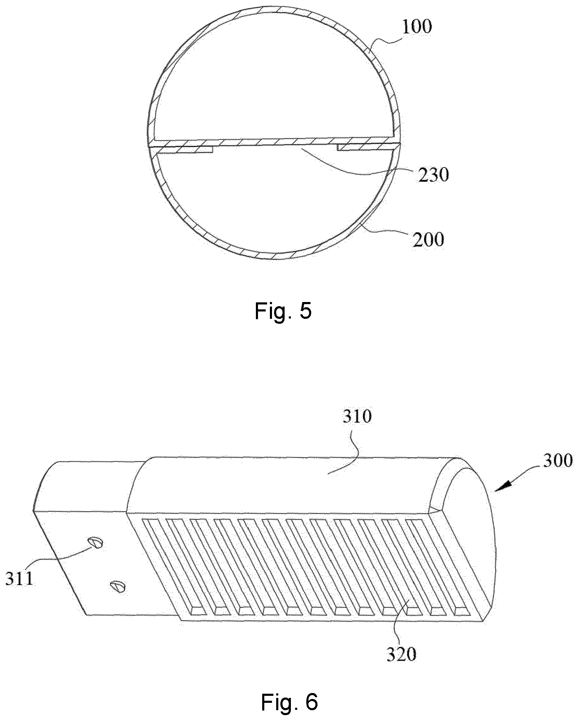

As shown in Fig. 5, to avoid the situation in which the wire harness comes out of the wire harness pipe cavity after being mounted in the through-wall hole, the mounting slot opening 230 formed on an attached surface of the wire harness pipe 200 in the embodiment of the present disclosure. The mounting slot opening is sealed by the attached surface, as a physical board, of the fresh air pipe 100 in a case where the wire harness pipe 200 is attached to the fresh air pipe 100 co-directionally side-by-side, so that the wire harness pipe 200 becomes a cavity with a fully enclosed outer peripheral outline, thereby restricting the wire harness pipe 200 inside the wire harness pipe cavity.

In terms of the structure, as shown in Fig. 4, the wire harness pipe 200 comprises an outer pipe wall portion 210 and two bending edge portions 220. Two bending edge portions 220 are formed and extended from two sides of the outer pipe wall along the attached surface face-to-face, and the mounting slot opening 230 is formed by a gap between the two bending edge portions 220. In the embodiments, the outer pipe wall portion 210 is mainly a pipe wall cooperated with the through-wall hole, and the two bending edge portions 220 and the mounting slot opening 230 together form the attached surface of the wire harness pipe 200.

In the embodiments, for the attached surface in flat, extended face-to-face refers to the two bending edge portions 220 extended to be closed to each other in the same flat surface. For the attached surface in non-flat, extended face-to-face refers to the two bending edge portions 220 extended to be closed to each other, and the each of extension line of the bending edge portion 220 can be regular or irregular curves, folded lines, etc.

In the embodiments, the outer pipe wall portion 210 and the two bending edge portions 220 of the wire harness pipe 200 are in one-piece integrated structures by integral molding.

Generally, the through-wall hole is circular. In order to make the through-wall pipe assembly fit tightly into the through-wall hole, the entire cross-section of the through-wall pipe section formed by the fit of the fresh air pipe 100 and the wire harness pipe 200 is circular. Optionally, a cross-section of the fresh air pipe 100 is shaped in a closed circular arc, and a cross-section of the wire harness pipe 200 is shaped in a semi-closed circular area, and the sum of the radians of the arc of the fresh air pipe 100 and the wire harness pipe 200 is 2π, so as to ensure that the cross-section of the fresh air pipe 100 and the wire harness pipe 200 is a complete circle.

Exemplarily, the radian of the arc of the fresh air pipe 100 is 3π/2, and correspondingly, the radian of the arc of the wire harness pipe 200 is π/2. Under this radian ratio, the cross-section area of the fresh air pipe 100 is larger than that of the wire harness pipe 200, which is adapted for the case where there is a large requirement for the fresh air volume, the number of the wire harness pipe 200 is small, or the diameter of the wire harness pipe 200 is small. Or the radian of the arc where the fresh air pipe 100 is 2π/3, and correspondingly, the radian of the arc where the wire harness pipe 200 is 4π/3. Under this radian ratio, the cross-section area of the fresh air pipe 100 is smaller than that of the wire harness pipe 200, which is adapted for a small requirement for the fresh air volume, the number of the wire harness pipe 200 is large, or the diameter of the wire harness pipe 200 is large.

Referring to the embodiments shown in Fig. 5, the cross-section of the fresh air pipe 100 is shaped in a semicircle, and the cross-section of the wire harness pipe 200 is shaped in a semicircle. Each radian of the arc of the fresh air pipe 100 and the wire harness pipe 200 is π. In the embodiment, the attached surface of the fresh air pipe 100 is a plane where the diameter line is located, the attached surface of the wire harness pipe 200 is a plane where the diameter line is located, and the two bending edge portions 220 of the wire harness pipe 200 are formed and extended from the outer circumference to the center of the circle in the radial direction.

In some other embodiments not shown in the drawings, the through-wall hole is non-circular, such as a square, an oval, etc., The outer peripheral outline of the entire through-wall pipe formed by attaching the fresh air pipe 100 and the wire harness pipe 200 are also adapted to the shape of the through-wall hole. The gap between the through-wall pipe and the through-wall hole is reduced, thereby reducing the occurrences of airflow and dust entering the indoor side from the gap and affecting the cleanliness of the indoor environment.

According to the through-wall pipe assembly provided by the embodiments of the present disclosure, the wire harness group and a fresh air channel are separated by the fresh air pipe 100 and the wire harness pipe 200, such that mutual interference between the wire harness pipe 200 and the fresh air channel can be avoided. Moreover, the wire harness group is mounted via the mounting slot opening 230 formed in the wire harness pipe 200, and sealed by the fresh air pipe 100, which is simple in structure and quick and easy during mounting.

In some optional embodiments, the through-wall pipe assembly further comprises a detachable wind cap 300 disposed at the air inlet end of the fresh air pipe 100. The wind cap 300 can serve to filter the fresh air and shield the fresh air pipe 100 from wind, rain, or debris.

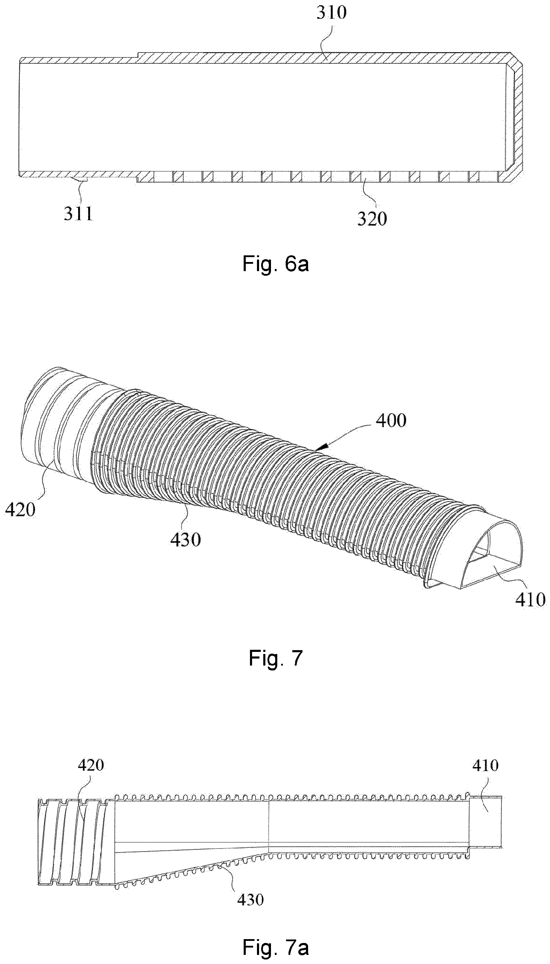

As shown in Figs. 6 and 6a, the wind cap 300 comprises a cap body 310 and a grille 320.

The cap body 310 is formed as a cylinder extended outwardly and co-directionally with the fresh air pipe 100, and one end of the cap body 310 facing outwardly being closed, and the other end of the cap body 310 facing inwardly being sleeved to the air inlet end of the fresh air pipe. As shown in Figs. 6 and 6a, the fresh air pipe 100 is a pipe body with a cross-section shaped in a semicircle, and the cap body 310 is also formed as a cylinder with a cross-section shaped in a semicircle, and the pipe diameter at the end of the cylinder facing inwardly is slightly smaller than the pipe diameter at the air inlet end of the fresh air pipe 100, so that the end of the cylinder facing inwardly can be inserted into the air inlet end of the fresh air pipe 100 to realize sleeve connection therebetween.

In the embodiments, one or more protrusions 311 are provided on the outer wall of the end of the cap body 310 facing inwardly, and correspondingly, one or more recesses 101 are provided on the inner wall of the air inlet end of the fresh air pipe 100. In a case where the cap body 310 is inserted into the fresh air pipe 100, the protrusions are held inside the recesses 101 one-to-one correspondingly to form stoppers in a pipe length direction of the fresh air pipe 100, which holds a limiting position and makes it difficult for the wind cap 300 to be dislodged in the reverse direction. As shown in Fig. 3, the number of recesses 101 is two, and the recesses 101 disposed on the attached surface of the fresh air pipe 100. Accordingly, in Fig. 6, the number of protrusions is two and the protrusions 311 are disposed on a plane along the diameter of the cap body 310 having a cross-section shaped in a semicircle.

In the embodiment, a fresh air inlet is disposed on the side of the cap body 310 facing downwardly, and the fresh air inlet is provided downwardly to prevent rainwater falling from above from entering the cap body 310. The fresh air inlet is a rectangular opening disposed on a plane along a diameter of the cap body 310, through which outdoor air can enter the cap body 310, and then flow into the fresh air pipe 100.

The grille 320 is covering the fresh air inlet for filtering the inlet airflow. As shown in Fig. 6, the grille 320 comprises a plurality of side-by-side spaced apart grills, with bar-shaped air holes formed between adjacent grills.

In some optional embodiments, the through-wall pipe assembly further comprises the fresh air inner-connecting pipe group for connecting the fresh air pipe 100 to a fresh air device (such as an air conditioner, etc.). An air inlet area of the air inlet of the fresh air device is generally larger than an air inlet area of the fresh air pipe 100. In order to facilitate the connection of the fresh air pipe 100 and the fresh air device with different air inlet areas, as shown in Figs. 1 and 2, the fresh air inner-connecting pipe group comprises a transition connecting pipe 400 and an intermediate connecting pipe 500. The transition connecting pipe 400 is a pipe portion of a variable cross-sectional area, and the intermediate connecting pipe 500 is a lengthened connecting pipe portion.

As shown in Figs. 7 and 7a, a first transition end 410 of the transition connecting pipe 400 is connected to the air outlet end of the fresh air pipe 100, and a second transition end 420 is connected to the intermediate connecting pipe 500, where the shape of the first transition end 410 is adapted to the shape of the air outlet end of the fresh air pipe 100, such as in the preceding embodiments where the cross-section of the air outlet end of the fresh air pipe 100 is shaped in a semicircle, the cross-section of the first transition end 410 is also shaped in semicircle. The first transition end 410 and the air outlet end of the fresh air pipe 100 are matched by sleeving. The cross-section of the second transition end 420 is shaped in a circular, and a passing air area of the second transition end 420 is larger than a passing air area of the first transition end 410.

The pipe portion between the first transition end 410 and the second transition end 420 of the transition connecting pipe 400 is in the form of a cross-section area increasing and is transitionally molded by a curved or straight transition slope 430.

Optionally, the length of the transition connecting pipe 400 is 20 cm to 30 cm.

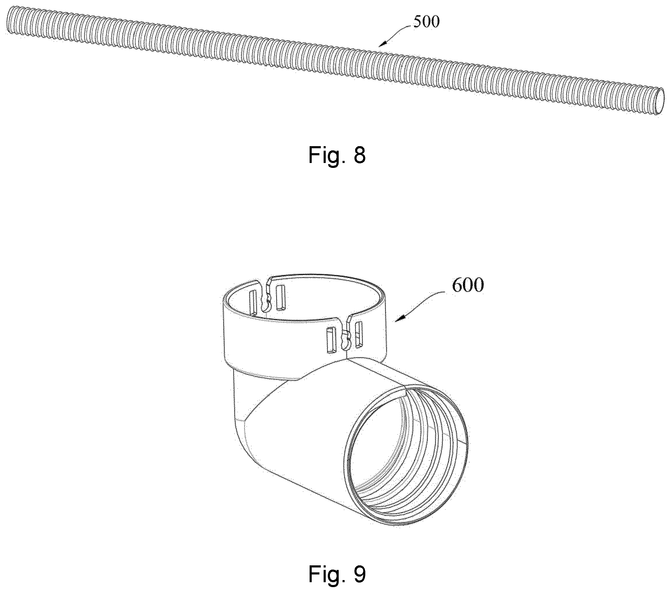

In the embodiment, as shown in Fig. 8, the intermediate connecting pipe 500 is a circular pipe, one end of the intermediate connecting pipe 500 is connected to the second transition connection end 420, and the other end of the intermediate connecting pipe 500 is connected to the fresh air device. Optionally, the intermediate connecting pipe 500 is connected to the second transition end 420 by screw thread, and/or, the intermediate connecting pipe 500 is connected to the air inlet port of the fresh air device by screw thread.

Optionally, the length of the intermediate connecting pipe 500 has a range from 120 cm to 160 cm.

Optionally, the intermediate connecting pipe 500 comprises a plurality of pipe portions in sequence, so that the intermediate connecting pipe 500 is dispersed into a plurality of pipe portions with short pipe lengths, and the processing and transportation of the pipe portions can be facilitated. The intermediate connecting pipe 500 can be lengthened or shortened by increasing or decreasing the number of pipe portions, so as to adapt to the variability of the mounting of the lengths of the air paths in the living rooms of different users.

Optionally, the transition connecting pipe 400 and/or the intermediate connecting pipe 500 is/are corrugated hose(s). The corrugated hose can better meet the connection requirements between the fresh air device and the fresh air pipe 100 because of the better axial ductility and radial elasticity.

In some optional embodiments, the fresh air inner-connecting pipe group further comprises an outerjoint 600 disposed at one end of the intermediate connecting pipe 500 connecting to the fresh air device. As shown in Fig. 9, the outer joint 600 is an L-shaped bending structure. One end of the outer joint 600 is connected to the intermediate connecting pipe 500, and the other end of the outer joint 600 is connected to the fresh air device. The L-shaped structure can change the direction of the airflow and enhance the strength, so that the air can flow into the fresh air device more smoothly and a higher connecting strength is provided at the pipeline connection position.

In some embodiments, the through-wall pipe assembly further comprises a strapping member, and the wire harness group and the transition connecting pipe 400 are connected by strapping with the strapping member. By providing the strapping member, it is possible to avoid the scattering of the part of the wire harness group extended to the indoor side and improve the regularity and aesthetics.

Optionally, the strapping member is nylon rope, tape, etc.

In other embodiments, the present disclosure further discloses an air conditioner, and the air conditioner comprises an air conditioner main body and any one of the through-wall pipe assemblies as disclosed in the above embodiments.

The air conditioner comprises an indoor unit and an outdoor unit, and the indoor unit and the outdoor unit are connected with a wire harness such as refrigerant pipes, power supply wires, etc., and the indoor unit is provided with a fresh air module for introducing fresh air to the indoor side. Herein, the wire harness between the indoor unit and the outdoor unit is disposed in the wire harness pipe of the through-wall pipe assembly, and the fresh air module of the indoor unit is coordinated with the through-wall pipe assembly so that the fresh air from the outdoor side can be introduced into the indoor unit and delivered to the indoor environment.

The above description and drawings sufficiently illustrate embodiments of the present disclosure to enable practice by those skilled in the art. Other embodiments may comprise structural and other modifications. Embodiments represent only possible variations. Unless explicitly required, individual parts and functions are optional, and the order of operation can vary. Portions and features of some embodiments may be included in or in place of portions and features of other embodiments. Embodiments of the present disclosure are not limited to the structures already described above and shown in the figures and are subject to various modifications and changes without departing from their scope. The scope of the present invention is defined by the attached claims.

## Claims

1. A through-wall pipe assembly, **characterized in that**, comprising:
a fresh air pipe (100), having a fresh air pipe cavity formed inside; and
a wire harness pipe (200), attached to the fresh air pipe (100) co-directionally side-by-side, having a wire harness pipe (200) cavity formed inside, and having a mounting slot opening (230) formed in a pipe length direction on an attached surface of the wire harness pipe (200) for mounting a wire harness group inside the wire harness pipe cavity;
wherein the mounting slot opening (230) is sealed by the attached surface of the fresh air pipe (100) in case where the wire harness pipe (200) is attached to the fresh air pipe (110).

2. The through-wall pipe assembly according to claim 1, wherein the wire harness pipe (200) comprises an outer pipe wall portion (210), two bending edge portions (220) formed and extended from two sides of the outer pipe wall along the attached surface face-to-face, and a mounting slot opening (230) formed by a gap between the two bending edge portions (220).

3. The through-wall pipe assembly according to claims 1 or 2, wherein a cross-section of the fresh air pipe (100) is shaped in a closed circular arc, a cross-section of the wire harness pipe (200) is shaped in a semi-closed circular arc, and a cross-section of the fresh air pipe (100) and the attached wire harness pipe (200) is shaped in a circle.

4. The through-wall pipe assembly according to claim 3, wherein the cross-section of the fresh air pipe (100) is shaped in a semicircle, and the cross-section of the wire harness pipe (200) is shaped in a semicircle.

5. The through-wall pipe assembly according to claim 1, further comprising a detachable wind cap (300) disposed at an air inlet end of the fresh air pipe (100);
wherein the wind cap (300) comprises:
a cap body (310), formed as a cylinder extended outwardly and co-directionally with the fresh air pipe (100), one end of the cap body (310) facing outwardly being closed, and the other end of the cap body (310) facing inwardly being sleeved to the air inlet end of the fresh air pipe (100), and a fresh air inlet being provided on a side of the cap body (310) facing downwardly; and
a grille (320), covering the fresh air inlet.

6. The through-wall pipe assembly according to claim 1, further comprising a fresh air inner-connecting pipe group for connecting the fresh air pipe (100) to a fresh air device;
wherein the fresh air inner-connecting pipe group comprises:
a transition connecting pipe (400), a first transition end (410) of connecting pipe being connected to the air outlet end of the fresh air pipe (100), and a second transition end (420) connecting pipe being connected to an intermediate connecting pipe (500), wherein a passing air area of the second transition connection end (420) is larger than a passing air area of the first transition end (410); and
an intermediate connecting pipe (500), an end of the intermediate connecting pipe (500) is connected to the second transition connection end (420), and the other end of the intermediate connecting pipe (500) is connected to the fresh air device.

7. The through-wall pipe assembly according to claim 6, the fresh air inner-connecting pipe group further comprising an outerjoint (600) disposed on one end of the intermediate connecting pipe (500) connecting the fresh air device.

8. The through-wall pipe assembly according to claim 6, the transition connecting pipe (400) and/or intermediate connecting pipe (500) is/are corrugated hose(s).

9. The through-wall pipe assembly according to claim 6, further comprising a strapping member, wherein the wire harness group and the transition connecting pipe (400) are connected by strapping with the strapping member.

10. An air conditioner, **characterized in that**, comprising:
an air conditioner main body and the through-wall pipe assemblies according to any one of claims 1 to 9.
